# EUROPÄISCHE PATENTSCHRIFT

(11) **EP 0 972 629 B1**
(45) Veröffentlichungstag und Bekanntmachung des Hinweises auf die Patenterteilung: **19.11.2003**
(21) Anmeldenummer: 99112680.6
(22) Anmeldetag: 02.07.1999
(51) Int. Cl.: B29C 70/48, B29C 37/00

(54) **Verfahren zum Herstellen von Aussenhautteilen**
Process for manufacturing of exterior parts
Procédé pour la fabrication de parties extérieures

(30) Priorität: 17.07.1998 DE 19832325; 31.07.1998 DE 19834707
(43) Veröffentlichungstag der Anmeldung: 19.01.2000
(73) Patentinhaber: Bayerische Motoren Werke Aktiengesellschaft, 80788 München (DE); Kunststoffverarbeitung Wimmer GmbH, 83278 Traunstein (DE)
(72) Erfinder: Greger, Martin, 85757 Karlsfeld (DE); Wimmer, Franz, 83278 TS-Wolkersdorf (DE)

(56) Entgegenhaltungen:
- EP-A- 0 338 694
- EP-A- 0 485 919
- US-A- 5 518 385
- US-A- 5 588 392
- ROSATO D: "Rosato's Plastics Encyclopedia and Dictionary" 1993 , HANSER , NEW YORK XP002165896 * Seite 644 - Seite 646 *

## Beschreibung

Die Erfindung bezieht sich auf ein Verfahren der im Oberbegriff des ersten Anspruchs angegebenen Art.

Bei der Herstellung von Kleinserien oder Sonderserien für Außenhautteile von Fahrzeugen, insbesondere von Motorrädem, ist es bekannt, laminierte Kohlefaserteile von Hand in einer offenen Form herzustellen. Die Stabilität des Außenhautteiles wird nach der Trocknung/Aushärtung von Harz und Härte erreicht.

Die so hergestellten Außenhautteile weisen eine hohe Steifigkeit bei geringem Eigengewicht auf. Nachteilig hierbei ist jedoch, daß sie eine geringe Zähigkeit besitzen und deshalb bei einem Unfall des Fahrzeugs leicht zersplittern, was zusätzliche Verletzungen der am Unfall beteiligten Personen herrufen kann. Ein weiterer Nachteil besteht darin, daß aufgrund der Handarbeit nur wenig Bauteile hergestellt werden können, die zudem teuer sind.

Daneben ist allgemein das Injektionsverfahren für die Herstellung von Bauteilen aus faserverstärkten Kunststoffen bekannt (z.B. Kunststoffe/Synthetiks, 1993, Heft 10, Seite 40 bis 45). Mit diesem Verfahren können Außenhautteile für Fahrzeuge in Kleinserie hergestellt werden, die preiswerter und qualitativ hochwertiger als die im Handverfahren hergestellten Bauteile sind. Nachteilig hierbei ist es jedoch, dass sie eine Mindestwandstärke von > 3 mm aufweisen.

Aus Rosato's Plastics Encyclopedia and Dictionary, Artikel "resin transfer molding" sowie der US 5,588,392 ist es bei dem RTM-Verfahren allgemein bekannt, eine Harz-/Härter-Mischung herzustellen und in einem Vorratsbehälter zu lagern, der über ein Absperrventil und eine Einspritzleitung mit dem Formhohlraum verbunden ist. Hiermit können nur die oben beschriebenen Bauteile mit Wandstärken von > 3 mm hergestellt werden.

Aus der EP 0 338 694 A2 ist es darüber hinaus bekannt, Harz und Härter zu mischen und dann diese Harz-/Härtermischung zu erwärmen und in den erwärmten Formhohlraum zu injizieren. Auch mit diesem Verfahren lassen sich keine dünnwandigen Bauteile herstellen.

Aufgabe der vorliegenden Erfindung ist es, ein Injektionsverfahren vorzuschlagen, mit dem Außenhautteile für Fahrzeuge aus faserverstärkten Kunststoffen in Kleinserie mit einer hohen Oberflächenqualität hergestellt werden können, die zudem eine geringe Wandstärke aufweisen.

Diese Aufgabe wird erfindungsgemäß durch die Merkmale des ersten Anspruchs gelöst. Durch die Verwendung eines erwärmten Harzes, d. h. eines Harzes, das auf über Raumtemperatur auf beispielsweise ca. 40° erwärmt ist, wird die Harz-/Härtermischung dünnflüssig genug, um Bauteilwandstärken zu erreichen, die deutlich unter den bisherigen Wandstärken liegen, beispielsweise im Bereich von 1 mm oder weniger. Hierzu ist es wesentlich, den Formhohlraum aufsteigend von unten nach oben von der Harz-/Härtermischung durchströmen zu lassen, wobei die Harz-/Härtermischung enthaltende Kartusche direkt, also ohne zusätzliche Verbindungsleitungen, an die tiefste Stelle des Formhohlraumes am Formwerkzeug angeschraubt wird.

Ein weiterer Vorteil der Erfindung liegt darin, dass durch die exakte Positionierung der Harz- und Härteranteile vor dem Mischen keine sonst beim Injektionsverfahren notwendige Einlaufstrecke benötigt wird, die vor jedem Injektionsvorgang mit einem Lösungsmittel gereinigt werden muss. Somit wird Lösungsmittel und Arbeitszeit gespart, was zu einer deutlichen Reduktion der Herstellungskosten führt.

Die Weiterbildung nach Anspruch 2 hat den Vorteil, daß die Außenseite des erfindungsgemäß hergestellten Bauteils nicht noch zusätzlich lackiert werden muß. Sie besitzt bereits Endqualität. Lediglich muß ggf. ein Poliervorgang nachgeschaltet werden.

Durch die Weiterbildung nach Anspruch 3 wird eine Erhöhung der Steifigkeit des Bauteils erreicht. Trotz der Verwendung zweier Matten, nämlich der faserverstärkten Matte und einer Verstärkungsmatte, können mit dem erfindungsgemäßen Verfahren Bauteilwandstärken im Bereich von 1 mm erzielt werden. Diese Bauteile besitzen eine hohe Festigkeit und eine hohe Elastizität bei einer hohen Splittersicherheit. Versuche haben gezeigt, daß Motorradkotflügel, hergestellt nach dem erfindungsgemäßen Verfahren, trotz massiver Verformung nicht zu einem Splitterbruch neigen.

Durch die Weiterbildung nach Anspruch 4 wird auf einfache Weise sichergestellt, daß beide Matten gleichmäßig von der Harz-/Härtermischung durchtränkt werden. Gleichzeitig wird dadurch sichergestellt, daß ein minimaler Verbrauch an Harz-/Härtermischung gewährleistet wird. So können beispielsweise Motorradkotflügel mit dem erfindungsgemäßen Verfahren mit nur einem Überlauf am Formhohlraum hergestellt werden. Die so "verlorene" Harz-/Härtermischung ist somit sehr gering.

Die Ansprüche 5 bis 7 beschreiben bevorzugt Materialien für die faserverstärkte Matte und die Verstärkungsmatte.

Durch die Weiterbildung nach Anspruch 6 können mit dem erfindungsgemäßen Verfahren dekorativ hochwertige Außenhautteile hergestellt werden, bei denen aufgrund der Verwendung eines klaren Oberflächenlackes in der Form die Struktur der kohlefaserverstärkten Matte sichtbar ist. Der Faserverlauf der Kohlefasern sowie der farbig abgesetzten Glasfaserfäden bleibt mit dem erfindungsgemäßen Verfahren vollkommen parallel, so daß die so produzierten Bauteile eine hohe optische Qualität besitzen.

Im folgenden wird das erfindungsgemäße Verfahren anhand der Herstellung eines Motorradkotflügels näher erläutert.

Die hierzu verwendete Form besteht aus zwei Formwerkzeughälften, die entsprechend der Kontur des Kotflügels ausgebildet sind. Als erstes wird der Oberflächenlack auf die Formwerkzeughälfte, die die Bauteilaußenseite bildet, aufgespritzt. Da die Formwerkzeuge beheizt sind, trocknet er schnell und bildet eine leicht klebrige Oberfläche.

Hierauf wird eine zugeschnittene Kohlefasermatte mit den farbig abgesetzten Glasfaserfäden eingelegt. Aufgrund der leicht klebrigen Lackoberfläche, haftet sie in der Formwerkzeughälfte ohne zusätzliche Hilfsmittel.

Anschließend wird eine glasfaserverstärkte Matte aufgelegt und mit Hilfe von Klebstoffstreifen befestigt. Diese Klebstoffstreifen sind so angeordnet, daß sie für die Harz-/Härtermischung Strömungsleitelemente bilden, damit sichergestellt ist, daß beide Matten vollständig mit der Harz-/Härter-mischung durchtränkt werden.

Nach dem Einlegen und Befestigen der glasfaserverstärkten Matte wird die Form geschlossen.

Anschließend wird in einer Kartusche die für die Herstellung dieses Kotflügels benötigte Harz- und Härtermenge gemischt, wobei das Harz auf oberhalb Raumtemperatur erwärmt ist.

Nach dem Durchmischen von Harz und Härter wird die Kartusche direkt an den Einlauf des Formwerkzeuges angesetzt und die Harz-/Härtermischung an der tiefsten Stelle des Formhohlraumes in das Formwerkzeug injiziert.

Aufgrund der Injizierung der Harz-/Härtermischung an der tiefsten Stelle des Formwerkzeuges, der im Formwerkzeug vorhandenen Strömungsleitelemente und dem an der höchsten Stelle der Form, diametral dem Einlaß gegenüber angeordnete Harzüberlauf wird in kürzester Zeit eine vollständige Durchtränkung der beiden Matten erreicht.

Nach dem Aushärten der Harz-/Härtermischung kann das Formwerkzeug geöffnet werden und das Bauteil entnommen werden. Es muß dann nur noch an seinen Rändern entsprechend der Kontur des späteren Bauteils beschnitten werden.

## Patentansprüche

1. Verfahren zum Herstellen von Außenhautteilen für Fahrzeuge aus faserverstärkten Kunststoffen nach dem Injektionsverfahren, bei dem eine faserverstärkte Matte in ein geöffnetes Formwerkzeug eingelegt, nach dem Schließen des Formwerkzeuges von dessen tiefster oder tiefsten Stellen aufsteigend mit einer Harz/Härter-Mischung getränkt und nach dem Aushärten aus dem Formwerkzeug entnommen wird,
**dadurch gekennzeichnet, dass** ausschließlich die für die Herstellung jeweils eines Außenhautteils benötigte Harz/Härter-Mischung unter Verwendung eines erwärmten Harzes hergestellt wird und dass diese erwärmte Harz/Härter-Mischung anschließend unmittelbar - ohne Verwendung einer Einlaufstrecke - direkt in den Formhohlraum injiziert wird.

2. Verfahren nach Anspruch 1,
**dadurch gekennzeichnet, daß** vor dem Einlegen der faserverstärkten Kunststoffmatte in das Formwerkzeug ein Oberflächenlack (Gelcoat) auf die die Außenseite des Außenhautteils bildende Formhälfte aufgetragen wird.

3. Verfahren nach Anspruch 1 oder 2,
**dadurch gekennzeichnet, daß** auf die eingelegte faserverstärkte Matte eine Verstärkungsmatte aufgelegt und an dem Formwerkzeug befestigt wird:

4. Verfahren nach Anspruch 3,
**dadurch gekennzeichnet, daß** die Befestigung für die Verstärkungsmatte gleichzeitig als Strömungsleitelement für die injizierte Harz/Härter-Mischung dient.

5. Verfahren nach einem der vorangegangenen Ansprüche,
**dadurch gekennzeichnet, daß** als faserverstärkte Matte eine kohlefaserverstärkte Kunststoffmatte (CFK) verwendet wird.

6. Verfahren nach einem der vorangegangenen Ansprüche,
**dadurch gekennzeichnet, daß** die CFK-Matte eingewebte, farbig abgesetzte Glasfaserfäden besitzt.

7. Verfahren nach einem der vorangegangenen Ansprüche,
**dadurch gekennzeichnet, daß** als Verstärkungsmatte eine glasfaserverstärkte Matte verwendet wird.

## Claims

1. A method of producing parts of vehicle body shells from fibre-reinforced plastics by injection, wherein a fibre-reinforced mat is inserted into an open mould, is impregnated with a resin/hardener mixture rising from the lowest place or places after closing the mould, and is removed from the mould after hardening,
**characterised in that** only the amount of resin/hardener mixture needed for each shell part is produced, using a heated resin, and the heated resin/hardener mixture is then immediately injected into the mould cavity without using an inlet section.

2. A method according to claim 1,
**characterised in that** before the fibre-reinforced plastic mat is inserted into the mould, a surface lacquer (gel coat) is applied to the half-mould forming the outside of the shell part.

3. A method according to claim 1 or 2,
**characterised in that** a reinforcing mat is placed on the inserted fibre-reinforced mat and is fastened to the mould.

4. A method according to claim 3, **characterised in that** the fastening of the reinforcing mat also serves as a flow duct for the ejected resin/hardener mixture.

5. A method according to any of the preceding claims,
**characterised in that** the fibre-reinforced mat is a carbon-fibre reinforced plastic mat (CFK).

6. A method according to any of the preceding claims,
**characterised in that** the CFK mat contains woven-in, differently-coloured glass fibre filaments.

7. A method according to any of the preceding claims,
**characterised in that** the reinforcing mat is a glass fibre-reinforced mat.

## Revendications

1. Procédé de fabrication d'enveloppes externes de véhicules en matières plastiques renforcées par des fibres selon le procédé d'injection, une natte renforcée par des fibres étant insérée dans un outil de moulage ouvert, imbibée d'un mélange résine/durcisseur après la fermeture de l'outil de moulage à partir de l'endroit ou des endroits les plus bas de celui-ci et retirée de l'outil de moulage après durcissement,
**caractérisé en ce qu'**
exclusivement le mélange résine/durcisseur nécessaire pour la fabrication de chaque élément extérieur en utilisant une résine réchauffée, et ce mélange résine/durcisseur réchauffé est injecté ensuite directement dans l'espace creux de moulage - sans utiliser de canal d'introduction.

2. Procédé selon la revendication 1,
**caractérisé en ce qu'**
un vernis superficiel (Gelcoat) est appliqué avant l'insertion de la natte en matière plastique renforcée par des fibres sur la moitié de moule formant la face extérieure de la partie extérieure.

3. Procédé selon la revendication 1 ou 2,
**caractérisé en ce que**
sur la natte renforcée par des fibres insérée une natte de renforcement est placée et fixée à l'outil de moulage.

4. Procédé selon la revendication 3,
**caractérisé en ce que**
la fixation pour la natte de renforcement sert en même temps d'élément conducteur de courant pour le mélange résine/durcisseur injecté.

5. Procédé selon l'une quelconque des revendications précédentes,
**caractérisé en ce qu'**
en tant que natte renforcée par des fibres on utilise une natte en matière plastique renforcée par des fibres de carbone (CFK).

6. Procédé selon l'une quelconque des revendications précédentes,
**caractérisé en ce que**
la natte CFK présente des fils en fibre de verre tissés d'une couleur différente.

7. Procédé selon l'une quelconque des revendications précédentes,
**caractérisé en ce qu'**
en tant que natte de renforcement on utilise une natte renforcée par des fibres de verre.
